(19) **Europäisches Patentamt / European Patent Office / Office européen des brevets**

(11) **EP 2 220 979 B1**

(12) **EUROPEAN PATENT SPECIFICATION**

(45) Date of publication and mention
of the grant of the patent:
**14.12.2011 Bulletin 2011/50**

(51) Int Cl.:
***A47J 43/04*** *(2006.01)* ***A47J 43/07*** *(2006.01)*

(21) Application number: **09002495.1**

(22) Date of filing: **21.02.2009**

(54) **Blender for mixing or comminuting foodstuffs and method for operating a blender**

Mixer zum Mischen oder Zerkleinern von Nahrungsmitteln und Verfahren zum Betreiben eines Mischers

Mélangeur pour mélanger ou pulvériser des aliments et procédé de fonctionnement d'un mélangeur

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**25.08.2010 Bulletin 2010/34**

(73) Proprietor: **Braun GmbH
61476 Kronberg (DE)**

(72) Inventors:
• **Boland, Bernhard
60385 Frankfurt am Main (DE)**
• **Steiner, Thomas
65468 Trebur (DE)**

(56) References cited:
**CH-A5- 685 418      US-A- 2 275 878
US-A- 3 668 490**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

### FIELD OF THE INVENTION

The present invention relates to blender for mixing or comminuting foodstuffs in a work area of the blender comprising an illumination device for illuminating the work area, said illumination device being integrated in the blender. The present invention further relates to a method for operating a blender with an illumination device.

### BACKGROUND OF THE INVENTION

A plurality of domestic blenders, mixers or mixing devices for mixing or comminuting foodstuffs is already known from the state of the art. The known devices may be categorized into two broad classifications. The first category includes blenders of the stand type. They are usually used for mixing a large amount of material and have usually been used for kneading bread doughs and mixing other heavy foodstuffs. The second category includes blenders of the handheld type, the so-called hand blenders. The lightweight and portable hand blenders are usually used for mixing small amounts of material.

A blender of the stand type is for example disclosed in US 4,277,181. The known food mixer has a stand with a base, a mixer head for mixing foodstuffs being pivotally mounted on the stand. Inside the mixer head there is provided an electrical motor for providing motive power to the whippers of the food mixer. The whippers of the known food mixer, which may also be referred to as the processing tools of the food mixer, are fixed to the mixer head and extend downward into the work area of the known food mixer. The food mixer further comprises an illumination device for illuminating the work area. The illumination device is integrated in the mixer head and comprises an incandescent lamp as a light source, said incandescent lamp being screwed into a socket inside the mixer head. The incandescent lamp is placed in a recess of the mixer head, said recess having an outlet opening which is directed to the work area. Thus, the light generated by the incandescent lamp may leave the recess via the outlet opening in order to illuminate the work area. Further, a frosted lens is mounted within the outlet opening, said frosted lens diffusing the light from the incandescent lamp to provide uniform lightning to the work area.

The known blender for mixing foodstuffs has proved himself insofar as the work area is well illuminated by the incandescent lamp. However, due to the high rotation frequency of the proceeding tools it is difficult for the user to observe the mixing procedure. Thus, it is necessary to stop the proceeding tools of the blender in order to detect the progress of the mixing procedure.

It is therefore an object of the present invention to provide a blender for mixing or comminuting foodstuffs in a work area of the blender, which allows an easy and comfortable observation of the mixing or comminuting procedure during the mixing or comminuting procedure. It is a further object of the present invention to specify a method for operating a blender for mixing or comminuting foodstuffs, said method simplifying the observation of the mixing or comminuting procedure during the mixing or comminuting procedure.

### SUMMARY OF THE INVENTION

The above-mentioned problem is solved by a blender and a method as described in claims 1 and 15, respectively. Preferred and advantageous embodiments of the invention are described in the sub-claims.

The present invention is directed to a blender for mixing or comminuting foodstuffs in a work area of the blender. The work area of the blender is an area, in which the mixing or comminuting of the foodstuffs takes place. Thus, the work area may be the interior of a container in which the foodstuffs to be mixed or comminuted and the processing tools of the blender, e. g. a mixing tool or a cutter blade, are placed. The blender further comprises an illumination device for illuminating the work area. The illumination device is integrated in the blender. Thus, the illumination device may for example be placed inside the housing or a housing part of the blender. According to the invention the illumination device is designed to emit pulsed light signals in a stroboscopic manner. For example, the illumination device and its light source, respectively, is turned on and off in a flashlight-like manner. It is nevertheless also possible to block and deblock a permanent light of the illumination device in order to emit pulsed light signals in a stroboscopic manner.

If the work area is illuminated by pulsed light signals, the user does not have to see every single phase of the mixing or comminuting procedure. Instead, the user only perceives single pictures of the work area whenever a light signal is emitted to illuminate the work area. Thus, the continuous motion or transformation of the foodstuffs or/and the processing tool is represented by a series of short or instantaneous samples. This way, it is easier and more comfortable for the user to observe the comminuting or mixing procedure.

In a preferred embodiment of the blender according to the invention the blender is designed as a hand blender and a handheld blender, respectively. In contrast to a stand type blender, a hand blender is handheld so that a sideward, upward or downward movement could not be avoided during the comminuting or mixing procedure. Above this, such a movement of the hand blender may be desirable, especially when the foodstuffs to be mixed or comminuted spread over a wide area. Thus, the observation of the work area is difficult. By providing a hand blender with the above described illumination device emitting pulsed light signals in a stroboscopic manner, the observation of the progress of the comminuting or mixing procedure could be facilitated.

In a further preferred embodiment of the blender according to the invention the illumination device comprises a light source. This light source may for example be an incandescent lamp. However, it is difficult to turn on and off an incandescent lamp in a flashlight-like manner, so that a cover device has to be developed which blocks and deblocks the light of the incandescent lamp in order to emit pulsed light signals. Above this, an incandescent lamp needs a big installation space, so that the dimensions of the blender, especially the dimensions of a hand blender, have to be increased. In order to overcome these disadvantages, it is further preferred to use a light-emitting diode as a light source of the illumination device. Further, it is preferred that the light source is formed by a series of light-emitting diodes, i. e. there are provided at least two single light-emitting diodes. By providing a series of light-emitting diodes it is for example possible to vary the color temperature or the light intensity of the light signals by choosing the light-emitting diode having the corresponding attributes. Above this, it is possible to position the single light-emitting diodes in such a manner, that the work area is completely illuminated by the illumination device.

In an advantageous embodiment of the blender according to the invention the light source of the illumination device is designed to be line-operated or the light source is designed to be operated off the line or battery-supplied. If the motor for rotating the processing tool of the blender is already line-operated, the light source should be line-operated too. If the motor for rotating the processing tool of the blender is already operated off the line or battery-supplied, the light source should be operated off the line or battery-supplied as well. In both cases, the motor and the light source use the same energy source. If the light source is line-operated, it is preferred that the line voltage corresponds to 230V.

In order to make the observation of the comminuting or mixing procedure more comfortable the pulsation frequency of the light signals may be altered in a further preferred embodiment of the blender according to the invention. It is further preferred that the pulsation frequency of the light signals could be automatically or/and manually altered. In the first case, the pulsation frequency may for example be coupled with the rotation frequency of the processing tool, so that a change of the rotation frequency is considered, as will be described below. In the second case, the user may manually alter the pulsation frequency in order to change the pulsation frequency according to his needs. It is most preferred if the pulsation frequency may be automatically and manually altered in order to facilitate the handling of the blender on the one hand and to increase the flexibility of the blender on the other hand.

In a further preferred embodiment of the blender according to the invention the blender comprises a rotatable processing tool, said processing tool preferably being a mixing tool for mixing foodstuffs or a cutter blade for comminuting foodstuffs. The processing tool is placed in the work area in order to mix or comminute the foodstuffs in the work area. In this embodiment the pulsation frequency is coupled with the rotation frequency of the processing tool, i. e. if the rotation frequency is increased, the pulsation frequency is increased as well. If the rotation frequency is decreased, the pulsation frequency is decreased as well.

In a further preferred embodiment of the blender according to the invention which is based on the afore described embodiment the pulsation frequency is coupled with the rotation frequency according to the formula $F_p = F_r / x$, wherein $F_p$ is the pulsation frequency, $F_r$ is the rotation frequency of the processing tool and x is a number. In order to facilitate the observation of the comminuting or mixing procedure x is preferably greater than 1, i. e. x>1, and the pulsation frequency is lower than the rotation frequency.

In a further advantageous embodiment of the blender according to the invention the number x in the above-mentioned formula is an integral number. In other words, the rotation frequency is an integral multiple of the pulsation frequency. In this embodiment, the perceived single pictures of the work area, when a light signal is emitted to illuminate the work area, all show the work area when the processing tool is in the same rotational position. If the rotatable processing tool is for example not covered by the foodstuffs or a housing part of the blender, in this embodiment a fixed image of the rotating processing tool will be perceived. Thus, the successive pictures form an easy traceable animation of the transformation or motion of the foodstuffs in the work area, thereby facilitating the observation of the comminuting or mixing procedure.

It has been found out that an observation of the comminuting or mixing procedure could be further facilitated, if a very low pulsation frequency is used. Thus, in a further preferred embodiment of the blender according to the invention the number x in the above-mentioned formula is equal to or greater than 10 or 20, i. e. the rotation frequency is equal to or greater than ten times or twenty times the pulsation frequency. However, in this case it is further preferred if the number x is less than 500, in order to facilitate the observation of the comminuting or mixing procedure.

In another preferred embodiment of the blender according to the invention the pulsation frequency or number x in the above-mentioned formula may be manually altered in a region between +/- 20%. Thus, the flexibility of the blender is increased and the user may increase or decrease the pulsation frequency according to his needs. However, the pulsation frequency may still be coupled with the rotation frequency. If the relation between the pulsation frequency and the rotation frequency is for example 1 to 10, the user may decrease or increase the pulsation frequency so that said relation is changed. In this case, if the rotatable processing tool is not covered by the foodstuffs or a housing part of the blender, a pictorial representation of the processing tool which shows a slow rotation in one rotation direction or the other rotation direction can be achieved for the user, thereby facilitating observation of the progress of the comminuting or mixing procedure.

In a further preferred embodiment of the blender according to the invention the light intensity of the light signals is alterable. Depending on the ambient light intensity and/or the used container for the foodstuffs, the work area is more or less illuminated by the ambient light. If for example the ambient light intensity is low and/or a container with opaque walls is used, it might be helpful to increase the light intensity of the emitted light signals. On the other hand, if the ambient light intensity is high and/or a container with translucent walls is used, the emitted light signals do not necessarily have to have a high light intensity, so that the light intensity of the light signals may be reduced. In this embodiment the light intensity of the light signals may preferably manually and/or automatically altered. If the light intensity is automatically altered, a very comfortable handling of the blender is achieved. If the light intensity may be alternatively or additionally manually altered, the light intensity could be altered according to the individual needs of the user.

In another advantageous embodiment of the blender according to the invention which is based on the afore described embodiment the light intensity is automatically altered depending on the ambient light intensity. If the ambient light intensity is low, the light intensity of the emitted light signals will be automatically increased. If the ambient light intensity is high, the light intensity of the emitted light signals will be automatically decreased. As already mentioned above, a comfortable handling of the blender will be achieved since the user does not necessarily have to act in order to adapt the light intensity of the emitted light signals to the ambient light intensity. This automatic increase or decrease of the light intensity of the emitted light signals may for example be realized by integrating a sensor for sensing the ambient light intensity in the blender, which cooperates with a control unit of the illumination device.

In a further advantageous embodiment of the blender according to the invention the emitted light signal forms a light cone and the size of the light cone may be altered. In order to alter the size of the light cone, the top angle of the light cone may for example be altered. In this embodiment it is further preferred to alter the size of the light cone by an optical unit or/and a reflector unit of the illumination device. This embodiment is especially useful, when the blender is designed as a hand blender. While blenders of the stand type are usually used with containers having the same size, hand blenders could be used with containers having different sizes, especially different diameters. Thus, if a big container is used, it might be helpful to increase the size of the light cone so that a bigger part of the work area could be illuminated. On the other hand, if a small container for receiving the foodstuffs is used, so that the work area is already smaller, the size of the light cone could be decreased as well.

It is apparent from the description above, that a blender, especially a hand blender, according to this embodiment allows a flexible adaptation of the size of the light cone to the used container for receiving the foodstuffs to be mixed or comminuted. In order to alter the size of the light cone, there may for example be provided a manual control element at the blender.

In another advantageous embodiment of the blender according to the invention the illumination device is designed to emit light signals having different color temperatures. It is further preferred, if said color temperatures are manually or automatically alterable. By emitting light signals having different color temperatures it might be easier to observe the comminuting or mixing procedure depending on the color of the foodstuffs to be mixed or comminuted. If the color temperatures are manually alterable, the color temperature may be altered according to the individual needs of the user and according to the color of the foodstuffs to be mixed or comminuted, so that the observation is facilitated.

In another preferred embodiment of the blender according to the invention the blender comprises an outlet opening for the light signals and the outlet opening is directed at the work area. Such an outlet opening may for example be provided in a wall of a housing of the blender in which the illumination device is accommodated. Further, such an outlet opening may for example have a ringlike shape in order to surround the longitudinal axis of the blender, so that an excellent illumination of the work area is achieved. It is further preferred, if the illumination device comprises a light guide, more preferably an optical fibre, said light guide being positioned between the light source and the outlet opening for guiding the light signal from the light source to the outlet opening. If a light guide is used the light source does not have to be necessarily placed close to the outlet opening. Instead, the light source may be placed anywhere at or inside the blender. Thus, the size of the blender does not have to be increased since the available space could be used in an optimal way. This is especially of importance if the blender is a hand blender, which should not only be lightweight but also have small dimensions. When using a light guide, it is further preferred, if the light guide is integrated into the wall of a housing of the blender, in order to achieve a hand blender having small dimensions. This could for example be done by inlaying or inserting the light guide during injection molding of the housing of the blender.

In another advantageous embodiment of the blender according to the invention the blender comprises an upper portion, preferably a housing, more preferably a motor housing for receiving the motor of the blender, serving as a handle and being located at a distance from the work area and a lower portion, preferably a shaft housing for receiving the working shaft of the hand blender, extending into the work area, said working shaft more preferably carrying the processing tool, e. g. a mixing tool or a cutter blade, the illumination device being arranged in the upper portion. By arranging the illumination device in the upper portion, the illumination device is widely protected against contamination, so that the illumination device may still fulfill its task even if parts of the mixed or comminuted foodstuffs are hurled upward from the work area during the mixing or comminuting procedure.

In a further preferred embodiment of the blender according to the invention the upper portion comprises a radial protrusion, preferably a radially protruding housing part. The illumination device is at least partially arranged inside the radial protrusion or/and the outlet opening is provided in the wall of the radially protruding housing part, wherein the outlet opening is preferably provided in a lower wall of the radially protruding housing part. By arranging the illumination device inside the radial protrusion or by providing the outlet opening in the wall of the radially protruding housing part it is possible to illuminate a bigger part of the work area especially if the blender is designed as an elongated or rod-shaped hand blender. On the other hand, a better protection of the illumination device and the outlet opening, respectively, could be achieved which will be apparent from the following description of another preferred embodiment.

In another preferred embodiment of the blender according to the invention the outlet opening or/and the radial protrusion is positioned above the lower end of the upper portion. While the lower end of the upper portion is prone to contamination by foodstuffs being hurled upward during the mixing or comminuting procedure, the outlet opening or/and the radial protrusion in its upper position is widely protected against contamination. Thus, a secure illumination of the work area is warranted during the whole mixing or comminuting procedure.

The method for operating a blender, preferably a hand blender, for mixing or comminuting foodstuffs in a work area of the blender according to the invention concerns a method for operating a blender comprising an illumination device for illuminating the work area, said illumination device being integrated in the blender. This blender may for example be a blender according to the invention as described above. According to the invention the illumination device is operated in a way, so that it emits pulsed light signals in a stroboscopic manner. Concerning the advantages of the method it is referred to the advantages described in connection with the blender according to the invention, which apply accordingly. Above this, the above described embodiments of the blender and their advantages apply accordingly to preferred embodiments of the method.

## BRIEF DESCRIPTION OF THE DRAWINGS

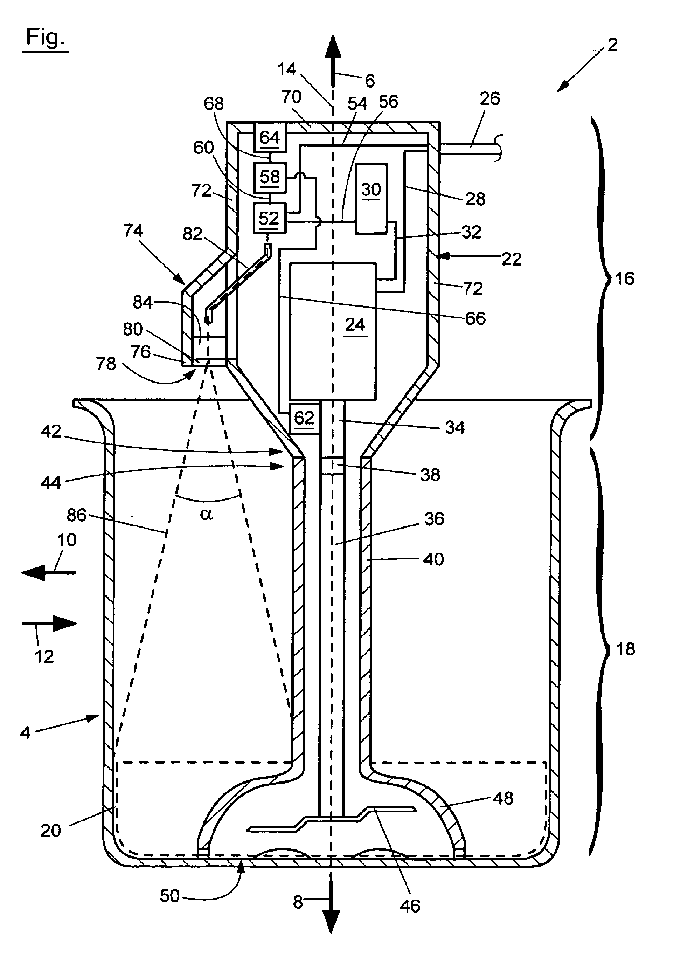

A preferred embodiment of the present invention will now be described, by way of example only, with reference to the drawings in which the only figure shows a schematic cross-sectional side-view of a hand blender.

## DETAILED DESCRIPTION OF THE DRAWINGS

The figure shows an embodiment of a hand blender 2 for mixing or comminuting foodstuffs (not shown) according to the invention, the foodstuffs being placed in a container 4. In the figure, the opposing longitudinal directions 6, 8 and the opposing radial directions 10, 12 of the hand blender 2 are indicated by corresponding arrows.

The hand blender 2 is rod-shaped and stretches along a longitudinal axis 14, said longitudinal axis 14 running in the longitudinal directions 6, 8. The hand blender 2 comprises an upper portion 16 and a lower portion 18, the upper portion 16 widely having a larger diameter than the lower portion 18. While the lower portion 18 extends into the work area 20 of the hand blender 2, said work area 20 being indicated by a dashed line, the upper portion 16 is placed at a distance from the work area 20, i. e. the upper portion 16 is placed upwards in the longitudinal direction 6 and attached to the lower portion 18.

The upper portion 16 forms a housing 22 for receiving the motor 24 of the hand blender 2, said motor 24 being an electrical motor. Thus, in this case the housing 22 may also be referred to as a motor housing. The motor 24 is line-operated or/and battery-supplied. For this purpose, there is provided a power chord 26 leading from the outside of the housing 22 into the housing 22. An extension of the power chord 26 inside the housing 22 is indicated by a line 28 through which the motor 24 is supplied with power. Alternatively or additionally there may be provided a battery 30 inside the housing 22 for supplying the motor 24 with power. The battery 30 is then coupled to the motor 24 via another line 32 inside the housing 22.

The motor 24 comprises an output shaft 34, said output shaft 34 protruding downwards in the longitudinal direction 8 along the longitudinal axis 14. Thus, the longitudinal axis 14 may also be referred to as the rotation axis of the hand blender 2. The distal end of the output shaft 34 is coupled to a working shaft 36 via a coupling 38 so that a rotation of the output shaft 34 about the longitudinal axis 14 is transmitted to the working shaft 36 via coupling 38.

The working shaft 36 also extends downward in the longitudinal direction 8 along the longitudinal axis 14 and is received inside an elongated tubular shaft housing 40 of the lower portion 18 of the hand blender 2. The housing 22 and the shaft housing 40 are fixed to one another at the lower end 42 of the housing 22 and the upper end 44 of the shaft housing 40, respectively. At the lower or distal end of the working shaft 36 there is attached a processing tool 46 by a torque proof connection. Thus, the rotation of the outlet shaft 34 of the motor 24 may be transmitted to the processing tool 46 via the coupling 38 and the working shaft 36. The processing tool 46 is placed in the work area 20 and serves to mix or comminute the foodstuffs in the work area 20 inside the container 4. Thus, the processing tool 46 may be a mixing tool or cutter blade, the latter being shown in the figure.

Due to the fact, that the processing tool 46 protrudes in the radial directions 10, 12, the lower part of the shaft housing 40 is formed by a bell-shaped casing 48 so that a collision between the rotatable processing tool 46 and the shaft housing 40 is avoided and the processing tool 46 is securely accommodated inside the bell-shaped casing 48. Above this, the bell-shaped casing 48 comprises an opening 50 in the longitudinal direction 8 so that foodstuffs in the work area 20 may enter the interior of the bell-shaped casing 48 in order to be mixed or comminuted by the rotating processing tool 46.

There is further provided an illumination device (no reference sign) which is integrated in the hand blender 2. The illumination device is accommodated in housing 22 of the hand blender 2 and serves to illuminate the work area 20. The elements of the illumination device will be described hereinafter.

The illumination device inside the housing 22 comprises a light source 52, the light source 52 being formed by a light-emitting diode. However, the light source 52 may also be formed by a series of light-emitting diodes, i. e. by at least two light-emitting diodes. As indicated by the lines 54, 56 the light source 52 is designed to be line-operated or operated off the line and battery-supplied, respectively. The light source 52 is controlled by a control unit 58 of the illumination device, sending control signals via line 60 to the light source 52.

Further, the illumination device comprises a first sensor 62 and a second sensor 64, which are linked with the control unit 58 via corresponding lines 66, 68. The first sensor 62 is a sensor for detecting the rotation frequency $F_r$ of the motor 24, the output shaft 34 of the motor 24 and the processing tool 46, respectively. The second sensor 64 is a sensor for measuring the ambient light intensity, i. e. the light intensity in the environment of the hand blender 2. For this purpose, the second sensor 64 is provided at the upper wall 70 of housing 22 so that the second sensor 64 could not be blocked by the hand of the user, who normally grasps the side wall 72 of the housing 22 in order to use the housing 22 as the handle of the hand blender 2.

The housing 22 further comprises a radial protrusion formed by a radially protruding housing part 74. The housing part 74 protrudes in the radial direction 10. In the lower wall 76 of the radially protruding housing part 74 there is further provided an outlet opening 78 for the light signals generated inside the housing 22 by the light source 52. A translucent cover 80 is mounted inside the outlet opening 78 to preclude upwardly hurled foodstuffs from entering the housing 22. The translucent cover 80 may for example be a frosted lens. The outlet opening 78 is directed in the longitudinal direction 8 so that the emitted light signals are directed to the work area 20 of the hand blender 2. As can be seen form the figure, the outlet opening 78, the axially protruding housing part 74 and its lower wall 76, respectively, are positioned in the longitudinal direction 6 above the lower end 42 of the housing 22, thereby preventing a contamination of the outlet opening 78 by upwardly hurled foodstuffs.

Alternatively, there may be provided a ringlike outlet opening 78, i. e. an outlet opening 78 having a ringlike shape, so that it surrounds the longitudinal axis 14 of the hand blender 2 and an excellent illumination of the work area 20 is achieved. In this case, the radially protruding housing part 74 should surround the upper portion 16 in a ringlike manner as well.

In order to guide the light of the light source 52 to the outlet opening 78, the illumination device further comprises a light guide 82, said light guide 82 preferably being an optical fibre. The light guide 82 is positioned between the light source 52 and the outlet opening 78. However, between the light guide 82 and the outlet opening 78 there is further provided an optical unit and/or a reflector unit 84 whose function will be described later. The optical unit and/or a reflector unit 84 and a part of the light guide 82 are accommodated inside the radially protruding housing part 74, so that the illumination device is at least partially arranged inside the radially protruding housing part 74. It is further preferred, if the light guide 82 is integrated into the side wall 72 of the housing 22 in order to reduce the dimensions of the hand blender 2 in the radial direction 10.

The illumination device is designed to emit pulsed light signals in a stroboscopic manner. In the shown embodiment, the light source 52 is turned on and off in a flashlight-like manner. Due to the fact, that the work area 20 is illuminated by pulsed light signals, the user does not see every phase of the mixing or comminuting procedure. Instead, the user only perceives single pictures of the work area 20 whenever a light signal is emitted. Thus, the continuous motion or transformation of the foodstuffs or/and the processing tool 46 is represented by a series of short or instantaneous samples. This way, it is easier and more comfortable for the user to observe the comminuting or mixing procedure.

In the shown embodiment, the pulsation frequency $F_p$ of the light signals may be automatically and manually altered.

In order to automatically alter the pulsation frequency $F_p$ of the light signals the pulsation frequency $F_p$ is coupled with the rotation frequency $F_r$ of the output shaft 34 and the processing tool 46, respectively. The first sensor 62 permanently detects the rotation frequency $F_r$ of the output shaft 34 of the motor 24 and sends the measured data via line 66 to the control unit 58 of the illumination device. In this connection it should be mentioned that the first sensor 62 does not necessarily have to measure the rotation frequency $F_r$ of the output shaft 34 and the processing tool 46, respectively, directly at the output shaft 34. The first sensor 62 may also detect a rotation frequency directly at another rotating part of the motor or transmission, said rotation frequency having a known relationship to the rotation frequency $F_r$ of the

output shaft 34 and the processing tool 46, respectively. Simultaneously, the control unit 58 calculates the pulsation frequency $F_p$ according to the formula $F_p = F_r / x$, wherein x is a number equal to or more preferably greater than 1. Most preferably x is an integral number.

Afterwards, the control unit 58 sends a corresponding control signal to the light source 52, so that the light source 52 emits pulsed light signals with the calculated pulsation frequency $F_p$. Thus, if the rotation frequency $F_r$ is increased or decreased the pulsation frequency will be increased or decreased as well. It has been found out, that an observation of the comminuting or mixing procedure could be further facilitated, if a very low pulsation frequency $F_p$ is used. Thus, in the shown embodiment the number x of the above-mentioned formula is equal to or greater than 10 or 20.

In order to manually alter the pulsation frequency $F_p$ there may be provided a manual control element (not shown) at the housing 22. Such a manual control element could be linked with the control unit 58 of the illumination device, so that the pulsation frequency $F_p$ or x of the above formula may be altered. In the shown embodiment the pulsation frequency $F_p$ or x of the above formula may be manually altered in a region between +/- 20%, so that the pulsation frequency could be altered according to the needs of the user to a sufficient extent without impeding the observation of the mixing or comminuting procedure.

In the shown embodiment, the second sensor 64 permanently measures the light intensity in the environment of the hand blender 2, i. e. the second sensor 64 measures the ambient light intensity. Then, the second sensor 64 sends the measured data via line 68 to the control unit 58 of the illumination device. If the measured ambient light intensity is low the control unit sends a corresponding control signal to the light source 52 via line 60, so that the light intensity of the light signals emitted by the light source 52 is increased. On the other hand, if the measured ambient light intensity is high the control unit sends a corresponding control signal to the light source 52 via line 60, so that the light intensity of the light signals emitted by the light source 52 is decreased. Thus, an automatic altering of the light intensity of the light signals emitted by the light source 52 is achieved, so that the handling of the hand blender 2 is more comfortable.

Further, the light intensity of the light signals may alternatively or additionally be manually altered according to the individual needs of the user. For this purpose, there may be provided a manual control element (not shown) at the upper portion 16 and the housing 22, respectively, as well.

As can be seen from the figure, the emitted light signal forms a light cone 86 which is indicated by dotted lines. The size of the light cone 86 may be altered with the help of the optical unit and/or reflector unit 84. However, it should be mentioned that the size of the light cone may alternatively be altered by moving the light source 52 and/or the light guide 82 relative to the outlet opening 78. In the shown embodiment, in order to alter the size of the light cone 86 the optical unit and/or reflector unit 84 could be adjusted in a way that the top angle $\alpha$ of the light cone 86 is altered. This embodiment is especially useful, when the blender is designed as the shown hand blender 2. While blenders of the stand type are usually used with containers having the same size, hand blenders 2 could be used with containers 4 having different sizes, especially different diameters. Thus, if a big container 4 is used it might be helpful to increase the size of the light cone 86 so that a bigger part of the work area 20 could be illuminated. On the other hand, if a small container 4 for receiving the foodstuffs is used, so that the work area 20 is already smaller, the size of the light cone 86 could be decreased as well. Thus, the hand blender 2 according to the shown embodiment allows a flexible adaptation of the size of the light cone 86 to the used container 4.

The illumination device is further designed to emit light signals having different color temperatures. The color temperatures could further be manually or automatically altered.

## Claims

1. Blender (2), preferably a hand blender, for mixing or comminuting foodstuffs in a work area (20) of the blender (2) comprising an illumination device for illuminating the work area (20), said illumination device being integrated in the blender (2), **characterised in that** the illumination device is designed to emit pulsed light signals in a stroboscopic manner.

2. Blender (2) according to claim 1, **characterised in that** the illumination device comprises a light source (52), said light source (52) preferably being formed by at least one light-emitting diode, said light source (52) more preferably being formed by a series of light-emitting diodes.

3. Blender (2) according to claim 2, **characterised in that** the light source (52) of the illumination device is designed to be line-operated, the line voltage preferably being 230V, or **in that** the light source (52) is designed to be operated off the line or battery-supplied.

4. Blender (2) according to one of the preceding claims, **characterised in that** the pulsation frequency ($F_p$) of the light signals is alterable, said pulsation frequency ($F_p$) of the light signals preferably being automatically or/and manually alterable.

5. Blender (2) according to claim 4, **characterised in that** the blender (2) comprises a rotatable processing tool (46), preferably a mixing tool or a cutter blade, said processing tool (46) being placed in the work area (20), the pulsation frequency ($F_p$) being coupled with the rotation frequency ($F_r$) of the processing tool (46).

6. Blender (2) according to claim 5, **characterised in that** the pulsation frequency ($F_p$) is coupled with the rotation frequency ($F_r$) according to the formula

$$F_p = F_r / x,$$

wherein $F_p$ is the pulsation frequency, $F_r$ is the rotation frequency of the processing tool (46) and x is a number, preferably an integral number, x more preferably being equal to or greater than 1, 10 or 20.

7. Blender (2) according to one of claims 4 to 6, **characterised in that** the pulsation frequency ($F_p$) or x is manually alterable in a region between +/- 20%.

8. Blender (2) according to one of the preceding claims, **characterised in that** the light intensity of the light signals is alterable, said light intensity preferably being manually and/or automatically alterable, said light intensity more preferably being automatically alterable depending on the ambient light intensity.

9. Blender (2) according to one of the preceding claims, **characterised in that** the emitted light signal forms a light cone (86), the size of the light cone (86) being alterable, the size of the light cone (86) preferably being alterable by an optical unit or/and a reflector unit (84) of the illumination device.

10. Blender (2) according to one of the preceding claims, **characterised in that** the illumination device is designed to emit light signals having different color temperatures, said color temperature preferably being manually or automatically alterable.

11. Blender (2) according to one of the preceding claims, **characterised in that** the blender (2) comprises an outlet opening (78) for the light signals, said outlet opening (78) being directed at the work area (20), the illumination device further preferably comprising a light guide (82), more preferably an optical fibre, said light guide (82) being positioned between the light source (52) and the outlet opening (78) for guiding the light signal from the light source (52) to the outlet opening (78).

12. Blender (2) according to one of the preceding claims, **characterised in that** the blender (2) comprises an upper portion (16), preferably a housing (22), more preferably a motor housing for receiving the motor (24) of the blender (2), serving as a handle and being located at a distance from the work area (20) and a lower portion (18), preferably a shaft housing (40) for receiving the working shaft (36) of the hand blender (2), extending into the work area (10), said working shaft (36) more preferably carrying the processing tool (46), the illumination device being arranged in the housing (22).

13. Blender (2) according to claim 12, **characterised in that** the upper portion (16) comprises a radial protrusion, preferably, a radially protruding housing part (74), the illumination device being at least partially arranged inside the radial protrusion or/and the outlet opening (78) being provided in the wall of the radially protruding housing part (74), preferably being provided in a lower wall (76) of the radially protruding housing part (74).

14. Blender (2) according to one of claims 11 to 13, **characterised in that** the outlet opening (78) or/and the radial protrusion is positioned above the lower end (42) of the upper portion (16).

15. Method for operating a blender (2), preferably a hand blender, for mixing or comminuting foodstuffs in a work area (20) of the blender (2), said blender (2) comprising an illumination device for illuminating the work area (20), said illumination device being integrated in the blender (2), **characterised by** operating the illumination device so that it emits pulsed light signals in a stroboscopic manner.

**Patentansprüche**

1. Mixer (2), vorzugsweise ein Handmixer, zum Mixen oder Zerkleinern von Nahrungsmitteln in einem Arbeitsbereich (20) des Mixers (2), eine Beleuchtungseinrichtung zum Beleuchten des Arbeitsbereichs (20) aufweisend, wobei die Beleuchtungseinrichtung in den Mixer (2) integriert ist, **dadurch gekennzeichnet, dass** die Beleuchtungseinrichtung dafür ausgelegt ist, gepulste Lichtsignale auf stroboskopische Weise zu emittieren.

2. Mixer (2) nach Anspruch 1, **dadurch gekennzeichnet, dass** die Beleuchtungseinrichtung eine Lichtquelle (52) umfasst, wobei die Lichtquelle (52) vorzugsweise von mindestens einer Licht emittierenden Diode gebildet wird, wobei die Lichtquelle (52) stärker bevorzugt von einer Reihe von Licht emittierenden Dioden gebildet wird.

3. Mixer (2) nach Anspruch 2, **dadurch gekennzeichnet, dass** die Lichtquelle (52) der Beleuchtungseinrichtung für einen Netzbetrieb ausgelegt ist, wobei die Netzspannung vorzugsweise 230 V beträgt, oder **dadurch**, dass die Lichtquelle (52) dafür ausgelegt ist, netzunabhängig oder mit Batteriestrom betrieben zu werden.

**4.** Mixer (2) nach einem der vorstehenden Ansprüche, **dadurch gekennzeichnet, dass** die Pulsfrequenz $(F_p)$ der Lichtsignale veränderbar ist, wobei die Pulsfrequenz $(F_p)$ der Lichtsignale vorzugsweise automatisch und/oder manuell veränderbar ist.

**5.** Mixer (2) nach Anspruch 4, **dadurch gekennzeichnet, dass** der Mixer (2) ein drehfähiges Verarbeitungswerkzeug (46) aufweist, vorzugsweise ein Mixwerkzeug oder eine Schneidklinge, wobei das Verarbeitungswerkzeug (46) im Arbeitsbereich (20) angeordnet ist, wobei die Pulsfrequenz $(F_p)$ mit der Drehfrequenz $(F_r)$ des Verarbeitungswerkzeugs gekoppelt ist.

**6.** Mixer (2) nach Anspruch 5, **dadurch gekennzeichnet, dass** die Pulsfrequenz $(F_p)$ mit der Drehfrequenz $(F_r)$ gemäß folgender Formel gekoppelt ist:

$$F_p = F_r\ /\ x,$$

wobei $F_p$ die Pulsfrequenz ist, $F_r$ die Drehfrequenz des Verarbeitungswerkzeugs (46) ist, und x eine Zahl, vorzugsweise eine ganze Zahl ist, wobei x stärker bevorzugt gleich oder größer 1, 10 oder 20 ist.

**7.** Mixer (2) nach einem der Ansprüche 4 bis 6, **dadurch gekennzeichnet, dass** die Pulsfrequenz $(F_p)$ oder x manuell innerhalb einer Region zwischen +/- 20 % geändert werden kann.

**8.** Mixer (2) nach einem der vorstehenden Ansprüche, **dadurch gekennzeichnet, dass** die Lichtstärke der Lichtsignale veränderbar ist, wobei die Lichtstärke vorzugsweise manuell und/oder automatisch veränderbar ist, wobei die Lichtstärke stärker bevorzugt abhängig von der Umgebungslichtstärke automatisch veränderbar ist.

**9.** Mixer (2) nach einem der vorstehenden Ansprüche, **dadurch gekennzeichnet, dass** das emittierte Lichtsignal einen Lichtkegel (86) bildet, wobei die Größe des Lichtkegels (86) veränderbar ist, wobei die Größe des Lichtkegels (86) vorzugsweise von einer optischen Einheit oder/und einer Reflektoreinheit (84) der Beleuchtungseinrichtung verändert werden kann.

**10.** Mixer (2) nach einem der vorstehenden Ansprüche, **dadurch gekennzeichnet, dass** die Beleuchtungseinrichtung dafür ausgelegt ist, Lichtsignale mit unterschiedlichen Farbtemperaturen zu emittieren, wobei die Farbtemperatur vorzugsweise manuell oder automatisch veränderbar ist.

**11.** Mixer (2) nach einem der vorstehenden Ansprüche, **dadurch gekennzeichnet, dass** der Mixer (2) eine Auslassöffnung (78) für die Lichtsignale aufweist, wobei die Auslassöffnung (78) auf den Arbeitsbereich (20) gerichtet ist, wobei die Beleuchtungseinrichtung ferner vorzugsweise einen Lichtleiter (82) umfasst, stärker bevorzugt eine optische Faser, wobei der Lichtleiter (82) zwischen der Lichtquelle (52) und der Auslassöffnung (78) angeordnet ist, um das Lichtsignal von der Lichtquelle (52) zur Auslassöffnung (78) zu leiten.

**12.** Mixer (2) nach einem der vorstehenden Ansprüche, **dadurch gekennzeichnet, dass** der Mixer (2) einen oberen Abschnitt (16), vorzugsweise ein Gehäuse (22), stärker bevorzugt ein Motorgehäuse zum Aufnehmen des Motors (24) des Mixers (2), der als Griff dient und einen Abstand zum Arbeitsbereich (20) aufweist, und einen unteren Abschnitt (18) umfasst, vorzugsweise ein Wellengehäuse (40) zum Aufnehmen der Arbeitswelle (36) des Handmixers (2), der in den Arbeitsbereich (10) hinein reicht, wobei die Arbeitswelle (36) stärker bevorzugt das Verarbeitungswerkzeug (46) trägt, wobei die Beleuchtungseinrichtung im Gehäuse (22) angeordnet ist.

**13.** Mixer (2) nach Anspruch 12, **dadurch gekennzeichnet, dass** der obere Abschnitt (16) einen radialen Vorsprung, vorzugsweise ein radial vorstehendes Gehäuseteil (74) umfasst, wobei die Beleuchtungseinrichtung zumindest teilweise innerhalb des radialen Vorsprungs angeordnet ist, oder/und die Auslassöffnung (78) in der Wand des radial vorstehenden Gehäuseteils (74) vorgesehen ist, vorzugsweise in einer unteren Wand (76) des radial vorstehenden Gehäuseteils (74) vorgesehen ist.

**14.** Mixer (2) nach einem der Ansprüche 11 bis 13, **dadurch gekennzeichnet, dass** die Auslassöffnung (78) und/oder der radiale Vorsprung oberhalb des unteren Endes (42) des oberen Abschnitts (16) angeordnet ist.

**15.** Verfahren zum Betreiben eines Mixers (2), vorzugsweise eines Handmixers, zum Mixen oder Zerkleinern von Nahrungsmitteln in einem Arbeitsbereich (20) des Mixers (2), wobei der Mixer (2) eine Beleuchtungseinrichtung aufweist zum Beleuchten des Arbeitsbereichs (20), wobei die Beleuchtungseinrichtung in den Mixer (2) integriert ist, **dadurch gekennzeichnet, dass** die Beleuchtungseinrichtung so betrieben wird, dass sie gepulste Lichtsignale auf stroboskopische Weise emittiert.

## Revendications

**1.** Mixer (2), de préférence un mixer manuel, pour mélanger ou réduire en poudre des produits alimentaires dans une zone de travail (20) du mixer (2) comprenant un dispositif d'éclairage pour éclairer la zone de travail (20), ledit dispositif d'éclairage étant intégré dans le mixer (2), **caractérisé en ce que** le dispositif d'éclairage est conçu pour émettre des signaux lumineux pulsés d'une manière stroboscopique.

**2.** Mixer (2) selon la revendication 1, **caractérisé en ce que** le dispositif d'éclairage comprend une source lumineuse (52), ladite source lumineuse (52) étant de préférence formée d'au moins une diode électroluminescente, ladite source lumineuse (52) étant plus préférablement formée d'une série de diodes électroluminescentes.

**3.** Mixer (2) selon la revendication 2, **caractérisé en ce que** la source lumineuse (52) du dispositif d'éclairage est conçue pour être utilisée sur secteur, la tension du secteur étant de préférence de 230V, ou **en ce que** la source lumineuse (52) est conçue pour être utilisée hors secteur ou alimentée par batterie.

**4.** Mixer (2) selon l'une des revendications précédentes, **caractérisé en ce que** la fréquence de pulsation ($F_p$) des signaux lumineux est modifiable, ladite fréquence de pulsation ($F_p$) des signaux lumineux étant de préférence modifiable automatiquement ou/et manuellement.

**5.** Mixer (2) selon la revendication 4, **caractérisé en ce que** le mixer (2) comprend un outil de traitement rotatif (46), de préférence un outil de mélange ou une lame de coupe, ledit outil de traitement (46) étant placé dans la zone de travail (20), la fréquence de pulsation ($F_p$) étant couplée à la fréquence de rotation ($F_r$) de l'outil de traitement (46).

**6.** Mixer (2) selon la revendication 5, **caractérisé en ce que** la fréquence de pulsation ($F_p$) est couplée à la fréquence de rotation ($F_r$) selon la formule

$$F_p = F_r / x,$$

dans laquelle $F_p$ est la fréquence de pulsation, $F_r$ est la fréquence de rotation de l'outil de traitement (46) et x est un nombre, de préférence un nombre entier, x étant plus préférablement égal ou supérieur à 1, 10 ou 20.

**7.** Mixer (2) selon l'une des revendications 4 à 6, **caractérisé en ce que** la fréquence de pulsation ($F_p$) ou x est modifiable manuellement dans une région comprise entre +/- 20 %.

**8.** Mixer (2) selon l'une des revendications précédentes, **caractérisé en ce que** l'intensité lumineuse des signaux lumineux est modifiable, ladite intensité lumineuse étant de préférence modifiable manuellement et/ou automatiquement, ladite intensité lumineuse étant plus préférablement modifiable automatiquement en fonction de l'intensité lumineuse ambiante.

**9.** Mixer (2) selon l'une des revendications précédentes, **caractérisé en ce que** le signal lumineux émis forme un cône de lumière (86), la taille du cône de lumière (86) étant modifiable, la taille du cône de lumière (86) étant de préférence modifiable par un dispositif optique ou/et un dispositif réflecteur (84) du dispositif d'éclairage.

**10.** Mixer (2) selon l'une des revendications précédentes, **caractérisé en ce que** le dispositif d'éclairage est conçu pour émettre des signaux lumineux ayant des températures de couleur différentes, ladite température de couleur étant de préférence modifiable manuellement ou automatiquement.

**11.** Mixer (2) selon l'une des revendications précédentes, **caractérisé en ce que** le mixer (2) comprend une ouverture de sortie (78) pour les signaux lumineux, lesdites ouvertures de sortie (78) étant dirigées au niveau de la zone de travail (20), le dispositif d'éclairage comprenant en outre de préférence un guide lumineux (82), plus préférablement une fibre optique, ledit guide lumineux (82) étant positionné entre la source lumineuse (52) et l'ouverture de sortie (78) pour guider le signal lumineux de la source lumineuse (52) à l'ouverture de sortie (78).

**12.** Mixer (2) selon l'une des revendications précédentes, **caractérisé en ce que** le mixer (2) comprend une partie supérieure (16), de préférence un logement (22), plus préférablement un logement de moteur pour recevoir le moteur (24) du mixer (2), servant de manche et étant situé à une certaine distance de la zone de travail (20) et une partie inférieure (18), de préférence un logement d'arbre (40) pour recevoir l'arbre de travail (36) du mixer manuel (2), s'étendant dans la zone de travail (10), ledit arbre de travail (36) portant plus préférablement l'outil de traitement (46), le dispositif d'éclairage étant arrangé dans le logement (22).

**13.** Mixer (2) selon la revendication 12, **caractérisé en ce que** la partie supérieure (16) comprend une partie saillante radiale, de préférence, une partie de logement faisant saillie en sens radial (74), le dispositif d'éclairage étant au moins partiellement arrangé à l'intérieur de la partie saillante radiale ou/et l'ouverture de sortie (78) étant fournie dans la paroi de la partie de logement faisant saillie en sens radial (74), étant de préférence fournie dans une paroi inférieure (76) de la partie de logement faisant saillie en sens radial (74).

**14.** Mixer (2) selon l'une des revendications 11 à 13, **caractérisé en ce que** l'ouverture de sortie (78) ou/et la partie saillante radiale sont positionnées au-dessus de l'extrémité inférieure (42) de la partie supérieure (16).

**15.** Procédé d'utilisation d'un mixer (2), de préférence un mixer manuel, pour mélanger ou réduire en poudre des produits alimentaires dans une zone de travail (20) du mixer (2), ledit mixer (2) comprenant un dispositif d'éclairage pour éclairer la zone de travail (20), ledit dispositif d'éclairage étant intégré dans le mixer (2), **caractérisé par** une utilisation du dispositif d'éclairage de sorte qu'il émet des signaux lumineux pulsés d'une manière stroboscopique.

## Fig.

**EP 2 220 979 B1**

## REFERENCES CITED IN THE DESCRIPTION

**Patent documents cited in the description**

- US 4277181 A